# EUROPÄISCHE PATENTANMELDUNG

(11) **EP 0 772 991 A1**
(43) Veröffentlichungstag der Anmeldung: **14.05.1997**
(21) Anmeldenummer: 96117198.0
(22) Anmeldetag: 25.10.1996
(51) Int. Cl.: A47J 27/62

(54) **Sensorgesteuerte Garungseinheit**

(30) Priorität: 08.11.1995 DE 19541632
(71) Anmelder: Bosch-Siemens Hausgeräte GmbH, 81669 München (DE)
(72) Erfinder: Has, Uwe, Dipl.-Ing., 84579 Unterneukirchen (DE); Friedrich, Jürgen, Dipl.-Ing., 91726 Gerolfingen (DE); Siebert, Thomas, Dipl.-Ing. (FH), 84137 Vilsbiburg (DE)

(57) **Zusammenfassung**

Sensorgesteuerte Garungseinheit, bestehend aus Gargerät, Sensorik und Kochfeld, wobei ein der sensorgesteuerten Garungseinheit zugeordneter Infrarotsensor kochstellenbezogen leicht erhöht oberhalb des Kochfeldes angeordnet und in einer konstruktiven Funktonseinheit integriert ist, so daß in der sensorgesteuerten Garungseinheit Kochfeld, Gargerät und Sensorik systemhaft miteinander verbunden, aufeinander angepaßt und optimiert sind, daß das Gargerät ein Systemtopf (51) mit einem normierten Emissionsfaktor ist, bezogen auf einen Wellenlängenbereich der Infrarotstrahlung von 8 µm ≦ λ ≦ 14 µm, daß der Systemtopf (51) optimierte Topfwand- und Topfboden-Dickenbereiche einhält, und daß der Systemtopf (51) eine angepaßte Kontaktstelle (53) zwischen Topfdeckel (52) und Topfrand (54) besitzt.

## Beschreibung

Die Erfindung bezieht sich auf eine sensorgesteuerte Garungseinheit, bestehend aus Gargerät, Sensorik und Kochfeld, wobei ein der sensorgesteuerten Garungseinheit zugeordneter Infrarotsensor kochstellenbezogen leicht erhöht oberhalb des Kochfeldes angeordnet und in einer konstruktiven Funktionseinheit integriert ist.

Eine Anordnung zum Messen der Temperatur in einem Kochtopf ist durch die Patentschrift DE 33 41 234 C1 bekannt geworden. Diese Erfindung betrifft eine Anordnung zum Messen der Temperatur eines auf einer Heizplatte erwärmten Kochtopfes mit Kochgut, wobei mit Hilfe eines Strahlungsfühlers die Temperatur des Kochgutes ermittelbar ist.

Die Aufgabe der vorlegenden Erfindung besteht darin, eine sensorgesteuerte Garungseinheit als sensorgesteuertes System von Kochfeld und Gargerät aufzufassen, einem auf die Kochstellensensorik und Muldenelektronik angepaßten Systemtopf zu definieren, wobei der Systemtopf in vorteilhafter Weise mit der sensorgesteuerten Garungseinheit kommuniziert.

Die erfindungsgemäße Anordnung zur Lösung dieser Aufgabe ist **dadurch gekennzeichnet,** daß in der sensorgesteuerten Garungseinheit Kochfeld, Gargerät und Sensorik systemhaft miteinander verbunden, aufeinander angepaßt und optimiert sind, daß das Gargerät ein Systemtopf mit einem normierten Emissionsfaktor ist, bezogen auf einen Wellenlängenbereich der Infrarotstrahlung von 8 µm ≦ λ ≦ 14 µm, daß der Systemtopf optimierte Topfwand- und Topfboden-Dickenbereiche einhält und daß der Systemtopf eine angepaßte Kontaktstelle zwischen Topfdeckel und Topfrand besitzt.

Vorteilhafte Ausgestaltungen der Erfindung sind in den Unteransprüchen enthalten. Ein Ausführungsbeispiel nach der Erfindung ist im folgenden anhand der Zeichnung näher beschrieben. Es zeigt:
- Fig. 1: ein sensorgesteuertes Garungssystem,
- Fig. 2: ein erstes Detail des Systemtopfes,
- Fig. 3: eine zweites Detail des Systemtopfes,
- Fig. 4: ein drittes Detail des Systemtopfes,
- Fig. 5: die Gesamtheit des Systemtopfes.

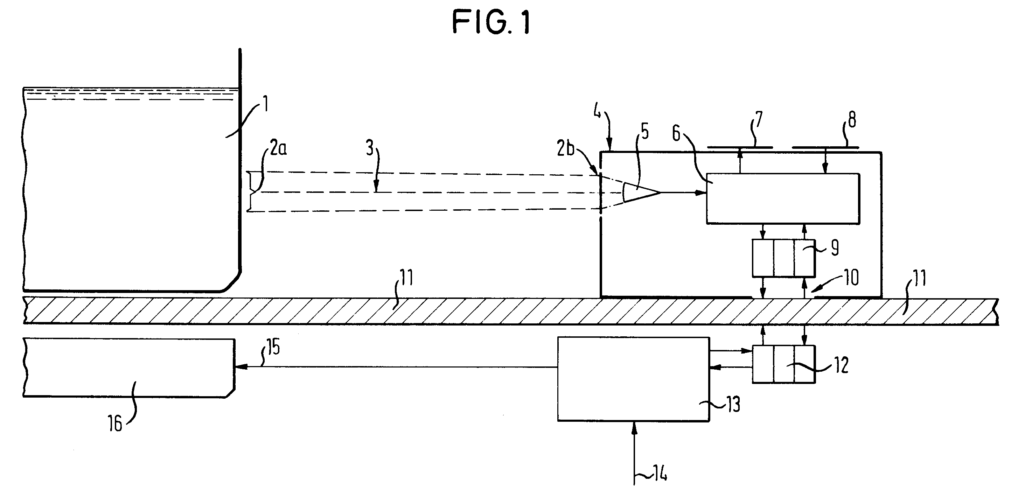

Gemäß der Figur 1 ist eine sensorgesteuerte Glaskeramik-Kochstelleneinheit dargestellt, die aus einem Topf 1, einem Zusatzgerät 4, einer Glaskeramik-Kochflächee 11, einer Muldenelektronik 13 und einer Strahlungsheizquelle 16 besteht.

Der mit dem Kochgut auf der Glaskeramik-Kochfläche 11 plazierte Topf 1 korrespondiert mit dem Zusatzgerät über einen Infrarotsensor. Anstelle des Zusatzgerätes können auch fest installierte oder in einer konstruktiven Einheit angeordnete, versenkbare Infrarotsensoreinheiten angeordnet sein. Der Infrarotsensor erzeugt am Topf 1 einen Infrarotmeßfleck 2a, der vom im Zusatzgerät 4 befindlichen Infrarotsensor 5 herrührt. Der Infrarotsensor 5 funktioniert über ein Aus trittsfenster für Infrarotstrahlen 2b, das an einer Austrittsstelle des Zusatzgeräte 4 angeordnet ist. Eine für das Zusatzgerät 4 notwendige Elektronik 6 befindet sich in Korrespondenz mit Anzeigeelementen 7 und Bedienelementen 8 des Zusatzgerätes und einer Infrarotsensor- und Empfängereinheit 9 im Zusatzgerät. Die Infrarotsender und -empfängereinheit 9 des Zusatzgerätes besitzt ein Fenster für Infrarotstrahlung, das über einer gleichen Einheit 12 in der Mulde durch die Glaskeramik-Kochfläche 11 getrennt direkt korrespondiert. Die Infrarotsensor- und Empfangsanlage 12 der Mulde verkehrt bidirektional mit der Kochmuldenelektronik 13, die von einem Netzspannungs-Zuführungsmodul 14 gespeist wird. Über ein Leitungsbündel 15 wird die Strahlungsheizung der Kochstelle 16 mit Kochstellen-Leistungszuschaltungen durch die Kochmuldenelektronik 13 beaufschlagt.

Als Alternative zu dieser konstruktiven Lösung gemäß Figur 1 ist es möglich, den Infrarotsensor in einer konstruktiven Funktonseinheit zu integrieren, die mit dem Kochmuldenrahmen verbunden ist, wobei die Funktionseinheit auf einen Mikroschalter einwirkt, der der Elektronikeinheit die Einsatzbereitschaft des Sensorsystems signalisiert.

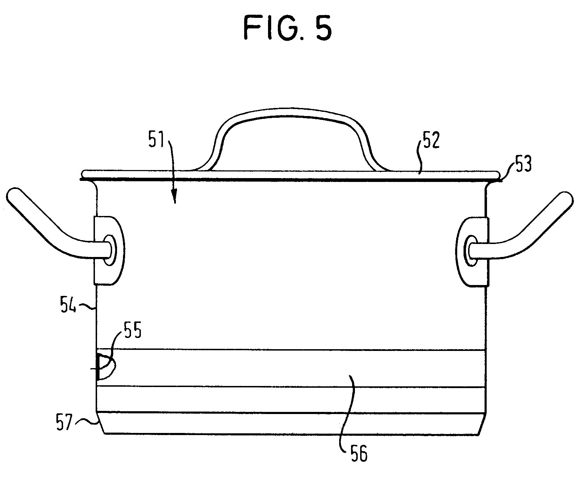

Die Vorteile einer sensorgesteuerten Garungseinheit sind in hohem Maße auf einen funktionsfähigen Topf abgestellt, der als Systemtopf bezeichnet werden kann, wenn er mit einer sensorgesteuerten Muldeneinheit in fester Zuordnung für den Sensorkochbetrieb vorgesehen ist. Diesbezüglich ist das Kochen auf einer sensorgesteuerten Glaskeramik-Kochstelleneinheit als System von Topf und Glaskeramik-Kochfläche aufzufassen. Außerhalb der Systemtopfzuordnung soll es dabei auch möglich sein, andere für Infrarottechnik taugliche Töpfe einzusetzen, wobei die Erfindung Hinweise darauf gibt, wie vorhandene Töpfe zu Systemtöpfen zweiter Ordnung gewandelt werden könnte. Ein solcher Systemtopf ist gemäß Figur 5 dargestellt.

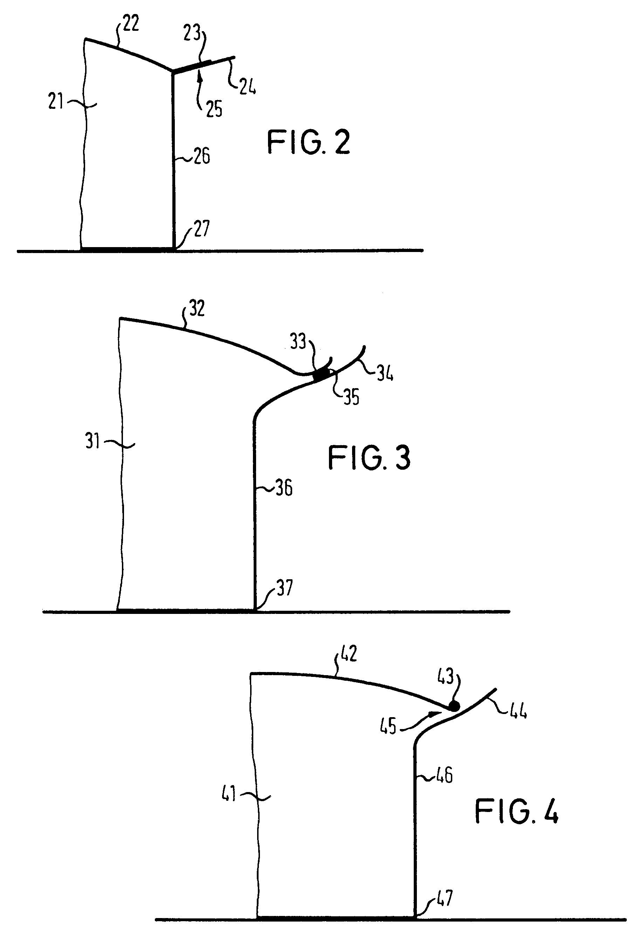

Erkennbar ist ein Systemtopf 51, ein Systemtopfdeckel 52, eine Kontaktstelle 53, eine Systemtopfwand 54, eine Füllstandsmarkierung 55, eine Emailschicht 56 und ein Topfboden 57 dargestellt. Der dargestellte Systemtopf 51 hat vielerlei sehr verschiedene Eigenschaften, die teilweise nur kompromißhaft in einem Topf gemeinsam realisiert werden können.
- Emissionsfaktor der Topfwand.
   In dem Bereich der Topfwand, der vom Infrarotsensor zur Temperaturmessung betrachtet werden kann, sollte die Topfwand einen hohen Infrarot-Emissionsfaktor von nahezu 1 haben. Praktisch wird der erreichbare Wert bei ca. 0,99 liegen. Dieser Emissionsfaktor muß nur in einem Wellenlängenbereich von 8 um ≦ λ ≦14 µm konstant sein. Dies wird dadurch erreicht, daß die Topfwand durch eine Oberfläche aus Email oder geeignete Kunststoffe gebildet wird. Ein Topf, der für das System nicht tauglich erscheint, kann durch eine Beschichtung, beispielsweise mit Folie, Lack oder anderen nachträglich aufgebrachten Mitteln, infrarottauglich ertüchtigt werden. Die Festlegung auf den genannten Bereich des Emissionsfaktors hat den weiteren Vorteil, daß angetrocknete Reste von zufällig an die Topfwand geratenen Lebensmitteln den gleichen Emissionsfaktor haben, wie die beschichtete Topfwand. Eine Verschmutzung der Topfwand kann daher das Ergebnis der Temperaturmessung nicht verfälschen.
- Abstrahlcharakteristik der Topfoberfläche.
   Die Abstrahlcharakteristik der Topfwand muß der eines Lam bert-Strahlers (Kosinus-Strahlers) entsprechen. Das bedeutet, daß der Infrarotsensor auch unter einem von 90° abweichenden Winkel auf die betrachtete Topfwand gerichtet sein darf, ohne daß die Funktionsfähigkeit des Systems in Frage gestellt wäre. Konstruktiv bedeutet das, der Infrarotsensor muß nicht genau radial auf den Systemtopf 51 ausgerichtet sein. Damit die Topfoberfläche die Abstrahlcharakteristik eines Lambert-Strahlers hat, muß die Emailoberfläche zumindest im betrachteten Infrarotbereich eine gewisse Welligkeit besitzen. Daher ist es nicht möglich, eine in sich dichte glatte Oberfläche zu erzeugen. Da rauhes Email im Haushaltbereich schwerlich einsetzbar ist (schwer zu reinigen und daher hygienisch bedenklich), sollte die Emailschicht eine glatte Oberfläche besitzen. Um sie für die Betrachtung des Infrarotsensors als rauh erscheinen zu lassen, wird eine Ausbildung der Emailschicht als Schichtfolge vorgeschlagen. Dabei ist die letzte, dem Benutzer zugewandte Emailschicht relativ glatt und im infraroten Bereich transparent. Die darauf folgende Schicht kann dann beliebig wellig sein. Eine solche transparente Schicht kann dabei auch aus einem einschichtigen Email bestehen, das aufgrund hoher Brenntemperaturen an der Oberfläche transparent verglast ist.
- Dicke der Topfwand.
   Die Topfwand sollte so dünn sein, daß Änderungen in der Lebensmitteltemperatur außen schnellstens bemerkt werden. Andererseits muß aber auch die Topfwand dick genug sein, daß ihre Wärmekapazität ausreicht, um Schwankungen der Lebensmitteltemperatur, die aufgrund der Konvektion im Lebensmittel selbst (besonders in Wasser) zuverlässig ausgemittelt werden. Versuche dazu haben ergeben, daß das am besten mit einer Wanddicke von ca. 1 mm bis 2,4 mm erreichbar ist.
- Erkennung der Füllhöhe.
   Der vom Infrarotsensor betrachtete Meßfleck auf der Topfwand muß auf der Innenseite mit Lebensmittel bedeckt sein, damit die außen gemessene Temperatur der des Lebensmittels entspricht. Die aktuelle Füllhöhe ist für den durchschnittlichen Benutzer nur sehr schwer einschätzbar. An der Topfinnenwand angebrachte Markierungen können dabei nur bedingt hilfreich sein, da sie nur bei geöffneten Topf sichtbar wären. Daher wird vorgeschlagen, die Beschichtung der Topfaußenwand mit einem Material auszuführen, das seine Farbe abhängig von der Temperatur ändert. Diese gegebenenfalls etwas aufwendigere Prozedur stellt jedoch sicher, daß die Füllhöhe jederzeit von außen problemlos erkannt wird.
- Höhe des Meßfleckes über der Glaskeramik.
   Der Meßfleck muß mindestens 35 mm über der Glaskeramik und nicht im Bereich des Überganges vom Topfboden zur Topfwand angebracht sein. Dies liegt darin begründet, daß ein Topf bei einer Erwärmung beispielsweise auf Induktionsmulden in Topfbodenbereich stark erwärmt werden kann. Da durch einen zu hohen Meßfleck die Mindestfüllmenge des Topfes ansteigt, ergibt sich der obengenannte Kompromiß. Ein Meßfleck kann dabei mit einem minimalen Durchmesser von ca. 10 bis 15 mm realisiert werden. Für eine optimierte Lage der Infrarot-Abstrahlfläche ergibt sich damit auf der Topfwand ein Bereich von ca. 35 bis 50 mm über der Kochfläche.
- Dicke des Topfbodens.
   Der Topfboden eines Systemtopfes 1 muß hinreichend dick sein bzw. eine ausreichende Wärmekapazität haben, um beim Einschalten der Heizung der Kochstelle ein punktuelles Überschwingen der Temperatur zu vermeiden, so daß das Lebensmittel nicht anbrennen oder anhängen kann. Dies wird, wie Versuche bestätigt haben, am besten mit einer Bodendicke ab 2 mm Stärke erreicht.
- Optimale Gestaltung von oberem Topfrand und Topfdeckelrand.
   Gemäß der Figuren 2, 3 und 4 sind Details des Systemtopfes 51 dargestellt, die eine optimierte Gestaltung des oberen Topfrandes unter Einbezug des Topfdeckelrandes vermitteln.
   Es sind erkennbar die Topfdetailstücke 21, 31 und 41, die Topfdeckel 22, 32 und 42, die Topfdeckelränder 23, 33, 43, die Topfränder 24, 34 und 44, die Kontaktstellen zwischen Deckelrand und Topfrand 25, 35 und 45, die Topfwände 26, 36 und 46 sowie die Topfböden 27, 37 und 47. Aus den Figuren 2 bis 4 ist im wesentlichen entnehmbar, daß die Kontaktstelle von Topfdeckel und Topfrand möglichst so geformt sein sollte, daß nach einem eventuellen dampfdruckbedingten Abheben des Deckels der Deckel von selbst wieder in die ursprüngliche Ausgangslage hingleitet, und somit während des gesamten Garungsvorganges ein gut abschließender Topf voraussetzbar ist. Dies ist insofern durchaus notwendig, da bei nicht gänzlich bis zur Mindestmarkierung gefüllten Topf das abkondensierende Wasser, das als Wasserfilm an der jeweiligen Topfwand auftritt, das System Sensor = Topf funktionsfähig erhält. Der abkondensierte Wasserfilm simuliert nicht vorhandene Füllhöhe, und erlaubt ein temperaturgerechtes Garen. Die dafür notwendige, sichere Funktion und Lage des Topfdeckels wird in vorteilhafter Weise dadurch erreicht, daß der Topfrand entsprechend Figur 2 beispielsweise eine leichte Trichtergestalt hat. Der Topfdeckel gleitet auf einem durch Kondensation entstehenden Wasserfilm stets in die vorgedachte Position zurück. Das bedingt auch keinen kreisrunden Topf, wie vielfach voraussetzungsgemäß angenommen wird. Dabei ist es von Vorteil, daß durch den entstehenden Wasserfilm geringe Ungenauigkeiten in der Passung des Topfdeckels, wie sie durch Fertigungsfehler oder unsachgemäße Behandlung des Kochgeschirrs entstehen können, ausgeglichen werden. Durch eine nach außen hin ansteigende Topfrandausführung wird die Führungskraft auf den Deckel zu seiner Normallage hin vergrößert. Mindestens jedoch sollte der Deckel in einem kleinen umlaufenden Bereich des Deckelrandes flach auf dem Topfrand aufliegen, wie es gemäß Figur 3 entnehmbar ist. Dadurch wird die Führung des Topfdeckels am Topfrand, also in der Kontaktstelle 35, deutlich verbessert. Ein ähnliches Verhalten Kann, wie in Figur 4 dargstellt ist, ein runder Deckelabschluß leisten. Dabei ist die Gleitfähigkeit des Topfdeckelrandes 43 gegenüber einem in der Kontaktstelle 45 entstehenden Wasserfilmes optimal.

Die dargestellten Vorzüge eines Systemtopfes sind für eine sensorgesteuerte Garungseinheit insofern notwendig, als daß durch das Sensorkochen nur mit Hilfe dieser Maßnahme genügend sicher Temperaturkonstanz und sensorgesteuertes Garen ermöglicht wird, wobei sowohl nahrungsmittelgerechtes Garen als auch energiesparendes Garen erfolgreich praktiziert werden kann.

## Patentansprüche

1. Sensorgesteuerte Garungseinheit, bestehend aus Gargerät, Sensorik und Kochfeld, wobei ein der sensorgesteuerten Garungseinheit zugeordneter Infrarotsensor kochstellenbezogen leicht erhöht oberhalb des Kochfeldes angeordnet und in einer konstruktiven Funktionseinheit integriert ist, **dadurch gekennzeichnet,**
daß in der sensorgesteuerten Garungseinheit Kochfeld, Gargerät und Sensorik systemhaft miteinander verbunden, aufeinander angepaßt und optimiert sind, daß das Gargerät ein Systemtopf (51) mit einem normierten Emissionsfaktor ist, bezogen auf einen Wellenlängenbereich der Infrarotstrahlung von 8 µm ≦ λ ≦ 14 µm daß der Systemtopf (51) optimierte Topfwand- und Topfboden-Dickenbereiche einhält, und daß der Systemtopf (51) eine angepaßte Kontaktstelle (53) zwischen Topfdeckel (52) und Topfrand (54) besitzt.

2. Sensorgesteuerte Garungseinheit nach Anspruch 1, **dadurch gekennzeichnet**, daß der Emissionsfaktor für den Systemtopf (51)im Wellenlängenbereich der Infrarotstrahlung von 8 µm ≦ λ ≦ 14 µm nahezu den Wert 1 besitzt.

3. Sensorgesteuerte Garungseinheit nach Anspruch 1, **dadurch gekennzeichnet**, daß der Systemtopf (51) eine ganzheitliche Emailschicht besitzt, die den Emissionsfaktor von ca. 1 besitzt.

4. Sensorgesteuerte Garungseinheit nach Anspruch 1, **dadurch gekennzeichnet**, daß der Systemtopf (51) in einme Topfwand-Dickenbereich von 1 bis 2,4 mm liegt und eine Topfboden-Mindestdicke von ca. 2 mm einhält.

5. Sensorgesteuerte Garungseinheit nach Anspruch 1. **dadurch gekennzeichnet**, daß der Systemtopf (51) eine Emailschicht (56) mit definierter Position, Fläche und Dicke besitzt.

6. Sensorgesteuerte Garungseinheit nach Anspruch 1, 4, **dadurch gekennzeichnet**, daß der Systemtopf (51) einen umlaufenden Emaildekorstreifen (56) von ca. 20 mm Breite besitzt, der zwischen 20 bis 25 mm Höhe vom Topfboden (57) her angesetzt ist.

7. Sensorgesteuerte Garungseinheit nach Anspruch 1, 4, **dadurch gekennzeichnet**, daß der Systemtopf (51) eine durch Schichtfolge ausgebildete Emailschicht (56) besitzt, wobei eine wellige Grundschicht von einer infrarottransparenten glatten äußeren Schicht abgedeckt ist.

8. Sensorgesteuerte Garungseinheit nach Anspruch 1, **dadurch gekennzeichnet**, daß der Systemtopf (51) ein speziell ausgeformte Kontaktstelle (53) zwischen Topfdeckel (52) und Topfrand besitzt, so daß auftretender Dampfdruck die Abdecklage nicht verändert.

9. Sensorgesteuerte Garungseinheit nach Anspruch 1, 7, **dadurch gekennzeichnet**, daß der Systemtopf (51) als Kontaktstelle (25) eine Trichtergestalt aufweist.

10. Sensorgesteuerte Garungseinheit nach Anspruch 1, 7, **dadurch gekennzeichnet**, daß der Systemtopf (51) an der Kontaktstelle (35) in einem kleinen umlaufenden Bereich des Deckelrandes (33) flach auf dem auslaufenden Topfrand (34) aufliegt.

11. Sensorgesteuerte Garungseinheit nach Anspruch 1, 7, **dadurch gekennzeichnet**, daß der Systemtopf (51) einen runden, auf dem auslaufenden Topfrand (44) aufsetzenden Deckelverschluß (43) besitzt.

12. Sensorgesteuerte Garungseinheit nach Anspruch 1, **dadurch gekennzeichnet**, daß der Systemtopf (51) eine innere Füllstandsmarkierung (55) besitzt.

13. Sensorgesteuerte Garungseinheit nach Anspruch 1, **dadurch gekennzeichnet**, daß der Systemtopf (51) eine äußere Topfwandbeschichtung besitzt, die ihre Farbe temperaturabhängig verändert.
